# EUROPEAN PATENT SPECIFICATION

(11) **EP 1 966 794 B1**
(45) Date of publication and mention of the grant of the patent: **20.07.2011**
(21) Application number: 06842624.6
(22) Date of filing: 20.12.2006
(51) Int. Cl.: G11B 7/125

(54) **A METHOD OF OPERATING A DATA RECORDING DEVICE**
VERFAHREN ZUM BETRIEB EINER DATENAUFZEICHNUNGSVORRICHTUNG
PROCEDE D'EXPLOITATION D'UN DISPOSITIF D'ENREGISTREMENT DE DONNEES

(30) Priority: 21.12.2005 CN 200510134012
(43) Date of publication of application: 10.09.2008
(73) Proprietor: Koninklijke Philips Electronics N.V., 5621 BA Eindhoven (NL)
(72) Inventor: VAN ENDERT, Tony Petrus, NL-5600 AE Eindhoven (NL)
(74) Representative: Uittenbogaard, Frank
(86) International application number: PCT/IB2006/054967
(87) International publication number: WO 2007/072437

(56) References cited:
- EP-A1- 0 557 584
- WO-A-2005/114661
- WO-A-2006/067717
- US-A- 5 483 512
- US-A1- 2004 017 750
- US-A1- 2005 030 860
- US-A1- 2005 041 549
- US-A1- 2005 052 969
- US-A1- 2006 198 262
- US-A1- 2006 215 517
- US-B1- 6 813 107

## Description

### FIELD OF THE INVENTION

The invention relates to a method of operating a data recording device and a data recording device implementing such a method.

A particular application of the invention relates to an optical data recording device using a laser for both reading and writing of data on an optical disk.

### BACKGROUND OF THE INVENTION

The patent document W02005008641 describes a method and device for recording information on a record carrier via a beam of radiation at a writing power. The device has a detection unit for detecting an actual reflection and a radiation control unit for, during recording the information controlling the writing power to be at least equal to a minimum value in dependence of an optimal writing power, and controlling the writing power in dependence of the actual reflection for increasing the writing power in the event that the actual reflection is reduced with respect to a reference reflection. The device has a control unit for executing, before recording the information, a power control step for determining the optimal writing power, and, during recording the information, setting the reference reflection in dependence, on an average reflection detected in a neighbouring part of the track.

The optical drive system according to the prior art are calibrated to get a maximum system margins (i.e. handling disturbances like offset without reading/writing errors), a maximum data transfer rate or a short access time. Operating the optical drive system with the maximum system margins generally results in an increase of the power consumption of the optical drive system and, thus, of the power dissipation into the optical drive system. W02005114661 discloses an optical disc drive for writing data on a recordable and/or rewritable optical disc (such as a CD+R, CD+RW, DVD }R or DVD }RW). The optical disc drive writes test data in test area in case no data is already present on the disc: Optimum parameter settings (such as focus, tilt or spherical aberration) are found by using, e.g" a jitter-based calibration procedure. Data is written on the disc using the optimum parameter setting thus found. Preferably the optimum writing power is also found using an optimum power control (OPC} procedure. In case data is already present on the disc this data is used for the optimizing procedure. Thereby writing test data in the test area if other data is already present is avoided. The disc drive is particularly adapted to write on blank media.

### OBJECT AND SUMMARY OF THE INVENTION

It is an object of the invention to propose a method of operating a data recording device that overcomes at least one of the drawbacks of the prior art, in particular that enables minimizing the power dissipation in the data recording device.

According to an aspect of the invention, the method of operating a data recording device comprises the steps of:
- varying at least one reading/writing head operating parameter until said operating parameter reaches a determined value,
- determining at least one error associated to the reading/writing head operating parameter , via determining an actual jitter value (DET σ_{A}), an actual error rate value (DET ER_{A}) and an actual error rate variation value (DET ΔER) associated to a reading/writing operation on the data record carrier,
   , and
- regulating the reading/writing head operating parameter based on the said actual values so as to maintain the error lower than an error threshold.

The variation step may consist in modifying the parameter so as to decrease the jitter value associated to the parameter.

The error determination step may consist in determining an actual jitter value, an actual error rate value and an actual error rate variation value associated to a reading/writing operation on the data record carrier.

The regulation step may consist in modifying the reading/writing head operating parameter when the actual jitter value, the actual error rate value and the actual error rate variation value are below an jitter threshold, an error rate threshold and an error rate variation threshold, respectively.

The reading/writing head operating parameter modification may consist in calculating a reading/writing head operating parameter variation and subtracting said variation to the reading/writing head operating parameter.

The reading/writing head operating parameter variation may be calculated according to a binary search method.

Advantageously, the determined value reached by the reading/writing head operating parameter is set at zero.

Optionally, the error associated to the reading/writing head operating parameter is calculated according to a determined frequency.

The reading/writing head operating parameter may be the radial tilt and/or the focus offset and/or the tangential tilt and/or the collimation.

According to a further aspect, the invention relates to a computer program product for a data recording device, the computer program product comprising a set of instructions that, when loaded into the data recording device, causes the data recording device to carry out the method according to the invention.

According to still a further aspect, the invention relates to a data recording device comprising a reading/writing head for reading/writing data on a data record carrier insertable into the data recording device and an electronic arrangement coupled to the reading/writing head. The electronic arrangement operates the reading/writing head according to the steps of the method according to the invention.

Advantageously, the electronic arrangement may comprise a processing module coupled to a driver module, the driver module generating the control signal defining the reading/writing head operating parameter, and providing the control signal to the reading/writing head.

The data record carrier may be an optical disk comprising a spiral track of data and the reading/writing head comprises a laser source emitting a laser beam towards the optical disk.

The adaptive method of the invention enables an optimum power dissipation calibration of a recording device, in particular reducing the power dissipation. This results in a minimization of the power dissipation/consumption during the reading and writing operations.

These and other aspects of the invention will be apparent from and elucidated with reference to the embodiments described hereinafter.

### BRIEF DESCRIPTION OF THE DRAWINGS

The present invention is illustrated by way of example and not limited to the accompanying figures, in which like references indicate similar elements:
Fig.1 is a block diagram schematically and partially illustrating a data recording device comprising an electronic arrangement performing the method according to the invention;
Fig.2 shows a curve illustrating the jitter as a function of the radial tilt of the reading/writing head;
Fig.3 shows a curve illustrating the jitter as a function of the focus offset of the reading/writing head;
Fig.4 is a block diagram illustrating the various steps of a first embodiment of the method of the invention;
Fig.5 is a block diagram illustrating the various steps of a second embodiment of the method of the invention;
Fig.6 is a block diagram illustrating a first application example of the method of the invention; and
Fig.7 is a block diagram illustrating a second application example of the method of the invention.

### DETAILED DESCRIPTION OF THE INVENTION

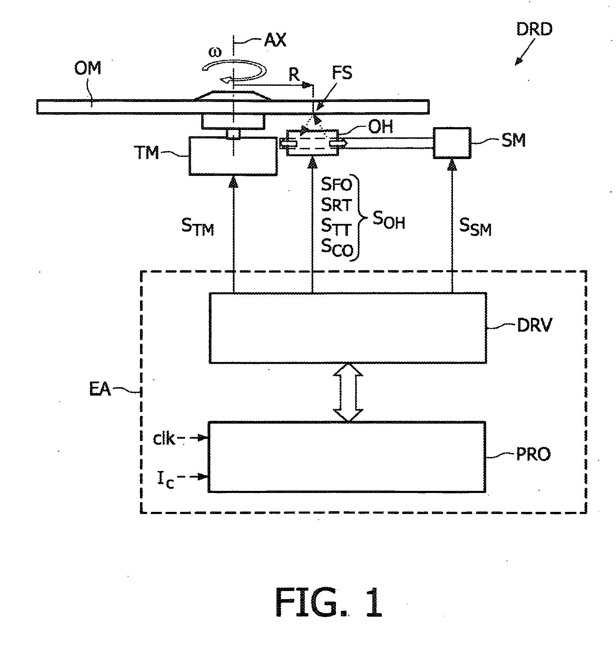

Fig.1 is a block diagram schematically and partially illustrating a data recording device DRD.

The data recording device DRD carries out operations that relates to both reading and writing of information on a data record carrier OM. The data recording device comprises a reading/writing head OH, a turntable motor TM (also called a spindle motor), a sled motor SM and an electronic arrangement EA.

A data record carrier OM is shown inserted in the recording device. The data record carrier OM may be an optical disk. The surface of the optical disk may comprise a single spiral circling from the inside of the disk to the outside of the disk. The binary information recorded on the track is represented by optically detectable portions, namely marks and - spaces. The marks and spaces are detectable due to their different optical properties, e.g. variation in reflection of a laser beam.

The reading/writing head OH comprises radiation source, e.g. a laser diode, generating a radiation beam, e.g. a laser beam. By controlling the power of the laser beam, it is possible to read or write information on the data record carrier OM. The reading/writing head OH also comprises various optical elements for guiding and focusing the laser beam on the track of the data record carrier OM. The reading/writing head OH further comprises a detector, e.g. a four-quadrant diode, for detecting and measuring the laser beam reflected by the optically detectable portions on the data record carrier track.

The turntable motor TM rotates the data record carrier OM according to an angular speed proportional to a rotating frequency. The rotating frequency determines the reading/writing mode and speed associated with the data recording device DRD.

The sled motor SM controls the radius R, namely the position of the reading/writing head OH with respect to the track. The position R designates the distance between the central axis AX of the data record carrier OM and the focusing spot FS of the laser beam emitted towards the track of the data record carrier.

The data recording device DRD may further comprise a loading unit (not shown) for inserting or removing the data record carrier.

The electronic arrangement EA comprises a processing module PRO and a driving module DRV.

The processing module PRO may comprise a data encoding module, a control module, and a laser power control module that are connected together through a bus (these elements have been omitted in the figure, for clarity reasons). The data encoding module function is to encode and decode data according to predefined recording format. The data encoding module provides signals used to write marks on the optical record carrier OM, and also timing signals. The processing module PRO may receive commands from a consumer electronic device (audio device, video device, computer, television, etc...). The laser power control module provides a laser power control signal to the reading/writing head OH in order to set the reading/writing power of the laser source. Generally, a laser power control module operates in dependence of three input signals in order to control the laser power. The input signals are known as the delta signal, the threshold signal and the alpha signal. The processing module PRO may also be connected to an interface module (not shown). The interface module allows connecting the data recording device DRD with other electronic circuits which are generally comprised in the consumer electronic device. The operation of the processing module requires a clock frequency clk and a core current I_{C}.

The driving module DRV is coupled to the processing module PRO. The driving module DRV controls the turntable TM and sled SM motors, and the elements of the reading/writing head OH of the data recording device DRD. More precisely, the driving module DRV provides a first motor signal S_{TM} to the turntable motor TM for controlling the rotating frequency of the optical disk OM. The driving module DRV provides a second motor signal S_{SM} to the sled motor SM for controlling the position of the reading/writing head OH and thus the scanning of the track of the optical disk OM. The driving module DRV provides a plurality of reading/writing head signals to the reading/writing head OH for controlling the tilting, focusing and collimating parameters of the reading/writing head OH. For example, the reading/writing head signals S_{OH} may comprise a radial tilt signal S_{RT}, a focus offset signal S_{FO}, a tangential tilt signal S_{TT} and a collimation signal S_{co}.

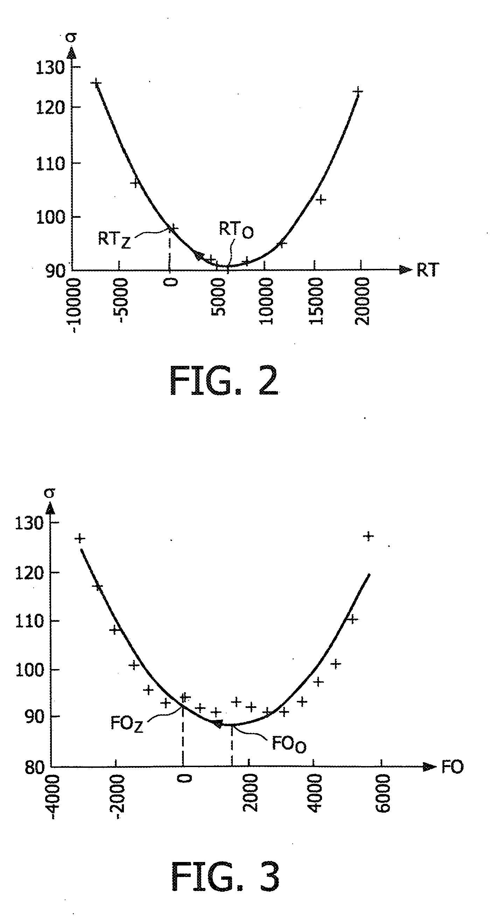

Fig.2 shows a curve illustrating the jitter as a function of the radial tilt RT of the reading/writing head OH. The curve represents an inverse parabola. The curve comprises two particular points, namely an optimum radial tilt RT_{O} and a zero radial tilt RT_{Z}. The optimum radial tilt RT_{O} corresponds to an optical head operating into a mode according to which a margin of the recording device is the highest. The zero radial tilt RT_{Z} corresponds to an optical head operating into another mode according to which the power consumption and thus the power dissipation are minimized. In the example shown in Fig.2, the radial tilt RT is modified from the optimum radial tilt RT_{O} to the zero radial tilt RT_{Z}. As a consequence, on the one hand, the performance of the recording device is deteriorated due to the jitter increase, and on the other hand, the power consumption/dissipation is decreased. As an example, when the radial tilt RT is varied from 6000 to 0, the jitter increases by around 1%, which corresponds to an acceptable degradation of the recording device performance and a minimum power consumption/dissipation. In Fig.2, the unit for the radial tilt is 10⁻³ rad and is scaled namely 2.10⁻³ rad per 5000 units. The jitter is also scaled by a factor 10.

Fig.3 shows a curve illustrating the jitter as a function of the focus offset FO of the reading/writing head OH. The curve represents an inverse parabola. The curve comprises two particular points, namely an optimum focus offset FO_{O} and a zero focus offset FOz. The optimum focus offset FO_{O} corresponds to an optical head operating into a mode according to which a margin of the recording device is the highest. The zero focus offset FO_{Z} corresponds to an optical head operating into another mode according to which the power consumption and thus the power dissipation are minimized. In the example shown in Fig.3, the focus offset FO is modified from the optimum focus offset FO_{O} to the zero focus offset FO_{Z}. As a consequence, on the one hand, the performance of the recording device is deteriorated due to the jitter increase, and on the other hand, the power consumption/dissipation is decreased. As an example, when the focus offset FO is varied from 1600 to 0, the jitter increases by around 1%, which corresponds to an acceptable degradation of the recording device performance and a minimum power consumption/dissipation. In Fig.3, the unit for the focus offset is 10⁻⁹ m and is scaled namely 100.10⁻⁹ m per 500 units. The jitter is also scaled by a factor 10.

Other parameters like the tangential tilt TT and/or the collimation CO behave in an analogous manner and will not be further described.

The adaptive method of the invention will now be described. It enables making a compromise between the recording device margin and associated performance, and the recording device power consumption/dissipation. The goal of the adaptive method of the invention is to determine the best compromise between the maximum recording device margin and associated performance, and the minimum recording device power consumption/dissipation.

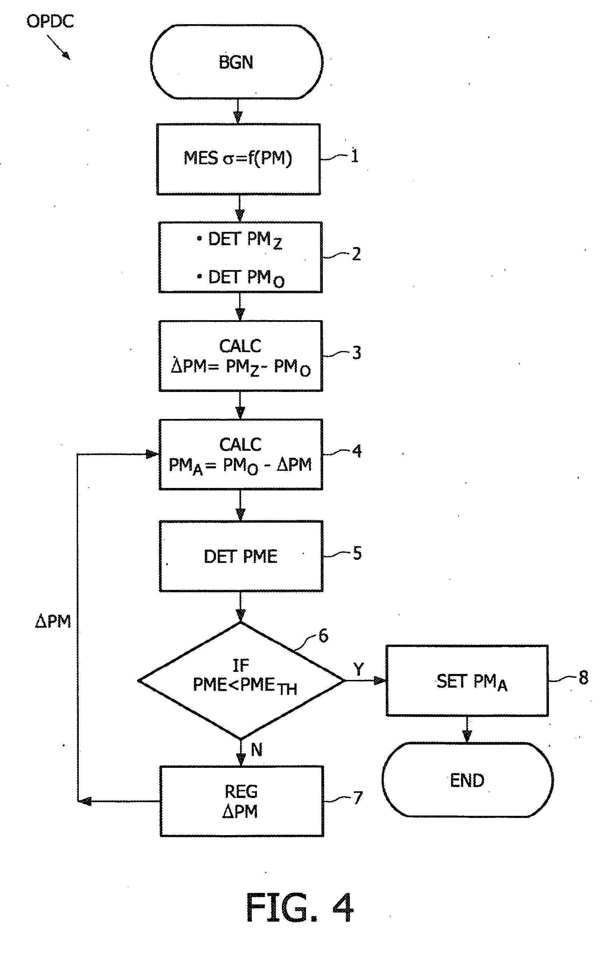

Fig.4 is a block diagram illustrating the various steps of a first embodiment OPDC of the method of the invention.

After the method is started BGN, various jitter values associated to various values of a reading/writing head operating parameter PM are measured (MES =f(PM)) according to a first step 1. The jitter is determined as a function of the reading/writing head operating parameter PM. The reading/writing head operating parameter PM may be the radial tilt RT or the focus offset FO or the tangential tilt TT or the collimation.

In a second step 2, a zero operating parameter PM_{Z} (DET PM_{Z}) and an optimum operating parameter PM_{O} (DET PM_{O}) are determined based on the measurement of the jitter as a function of the reading/writing head operating parameter PM. The zero operating parameter PM_{Z} corresponds to an optical head operating into a mode according to which the power consumption/dissipation is minimum. This may, for example, correspond to a reading/writing head operating parameter set to zero. The optimum operating parameter PM_{O} corresponds to an optical head operating into a mode according to which a margin of the recording device is the highest.

In a third step 3, a reading/writing head operating parameter difference PM between the zero operating parameter PM_{Z} and optimum operating parameter PM_{O} is calculated (CALC PM=PM_{Z}-PM_{O}).

In a fourth step 4, an actual value of the reading/writing head operating parameter PM_{A} is calculated (CALC PM_{A}=PM_{O}- PM). The actual value of the operating parameter PM_{A} corresponds to the difference between the optimum operating parameter PM_{O} and the operating parameter difference PM. At this stage, it means that the actual value of the operating parameter PM_{A} is set to the zero operating parameter PM_{Z}. Setting the operating parameter PM_{A} to zero may mean varying the reading/writing head operating parameter until it reaches such a determined value.

In a fifth step 5, an error PME associated to the actual value of the reading/writing head operating parameter is determined (DET PME).

The error PME may correspond to a byte error read/written from/to the data record carrier. A byte error occurs when one or more bits in a byte have a wrong value, as compared to their original recorded value. For example, as mentioned in Digital Versatile Disk DVD standards, a row of an ECC data block that has at least one byte in error constitutes a PI error. During playback after an initial recording, the errors as detected by an error correction system shall meet the following requirement: in any 8 consecutive ECC data blocks, the total number of PI error before any correction is made shall not exceed 280.

In a sixth step 6, a comparison between the error PME and an error threshold PME_{TH} is performed (IF PME<PME_{TH}). In case the error PME is not below the error threshold PME_{TH} (branch N), than the reading/writing head operating parameter is regulated (REG PM) according to a seventh step 7. In case the error PME is below to the error threshold PME_{TH} (branch Y), than the reading/writing head operating parameter is set to the actual value of the operating parameter PM_{A} (SET PM_{A}) according to step 8.

In the seventh step 7, a new value of the reading/writing head operating parameter difference PM is calculated and provided to the fourth step 4 in order to calculate a new actual value of the operating parameter PM_{A}. Then, the fourth 4, fifth 5, sixth 6 and seventh 7 steps are repeated till the error PME is not below the error threshold PME_{TH}.

After the fifth step 8, the method is finished (END).

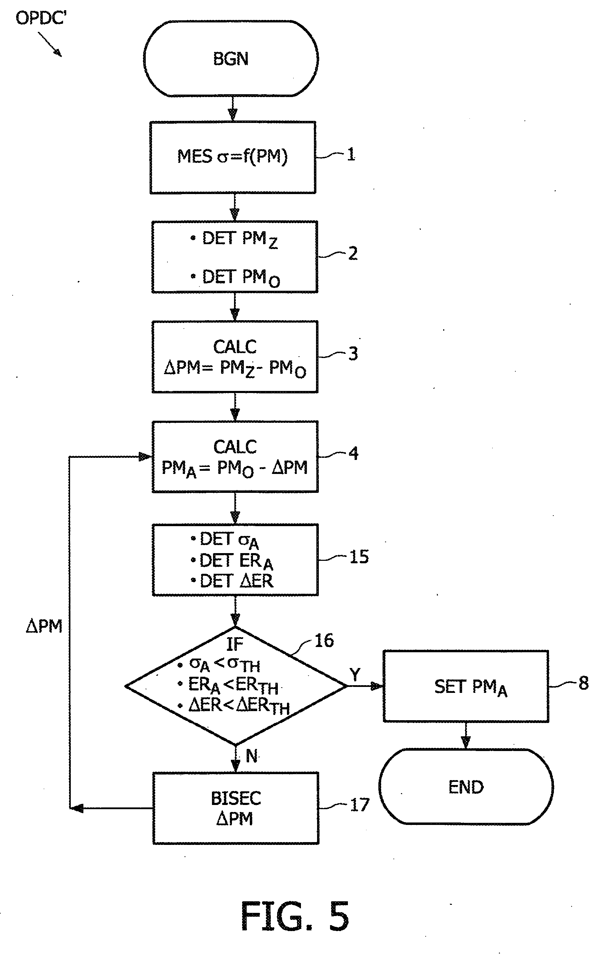

Fig.5 is a block diagram illustrating the various steps of a second embodiment OPDC' of the method of the invention.

The method of the invention according to the second embodiment differs from the first embodiment in that new fifth 15, sixth 16 and seventh 17 steps are introduced in the place of the previously described fifth 5, sixth 6 and seventh 7 steps, respectively.
According to the new fifth step 15, a plurality of error associated to the reading/writing operations on the data record carrier is determined. An actual jitter value (DET σ_{A}), an actual error rate value (DET ER_{A}), and an error rate variation value (DET ΔER) may be determined.

According to the new sixth step 16, a plurality of comparison is performed. A first comparison is performed between the actual jitter value σ_{A} and a jitter threshold σ_{TH} (If σ_{A}<σ_{TH}). A second comparison is performed between the actual error rate value (DET ER_{A}) and an error threshold ER_{TH} (If ERA < E_{RTH}).

Generally, the curve representing the error rate as a function of the parameter comprises a low error rate portion corresponding to an optimum parameter range and high error rate portions outside this range. The error rate has a very steep slope at both edges of the optimum parameter range. Thus, a third comparison may be performed between the error rate variation ΔER and an error rate variation threshold ΔER_{TH} (If ER < ER_{TH}).

These thresholds are determined in such a way that the reading and writing of data from/to the data record carrier can be satisfactorily performed with fewer margins.

In case the actual jitter value, the actual error rate value and the error rate variation are not below to their respective threshold (branch N), than the reading/writing head operating parameter is regulated (BISEC PM) according to a new seventh step 17. In case the actual jitter value, the actual error rate value and the error rate variation are below o their respective threshold (branch Y), than the reading/writing head operating parameter is set to the actual value of the operating parameter PM_{A} (SET PM_{A}) according to step 8.

A regulation step consisting in modifying the reading/writing head operating parameter is performed when the actual jitter value, the actual error rate value and the actual error rate variation value are below the jitter threshold, the error rate threshold and the error rate variation threshold, respectively.

According to the new seventh step 17, a new value of the reading/writing head operating parameter variation is calculated, for example, according to a binary search method optimizing the power consumption/dissipation (e.g. a bisection search). Then, the steps starting from the fourth step 4 are repeated.

Optionally, the plurality of error associated to the reading/writing head operating parameter may be calculated from time to time. For example, the plurality of error may be calculated periodically according to a determined frequency.

The adaptive method of the invention enables regulating the different reading/writing head operating parameters such that a minimum power consumption/dissipation is achieved (regulating the different parameters to a zero value) while data are read from and written to x the data recording carrier by the data recording device such that a satisfactorily performance is maintained (jitter and error rate are maintained below a acceptable limit).

The adaptive method of the invention OPDC may be included in the data recording device algorithms where calibrations are executed. As examples, such calibration may be executed during data record carrier recognition (after insertion of an optical disk in the optical recording device), during optimum power calibration (determination of the power of the laser source) or dynamic calibration during read/write operations of the data record carrier.

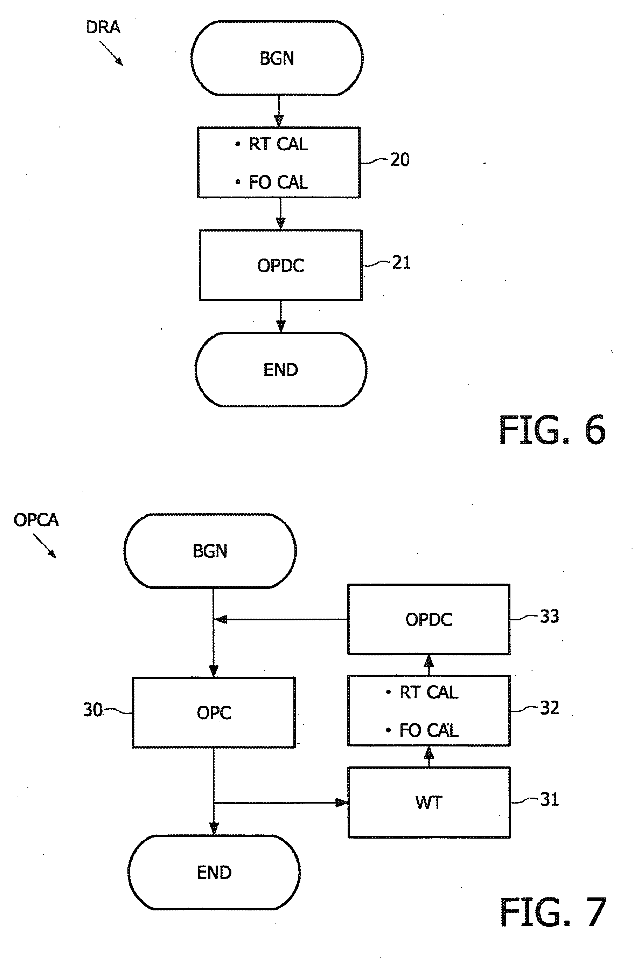

Fig.6 is a block diagram illustrating a first application example of the method of the invention.

The adaptive method of the invention may be executed during an execution of a data record carrier recognition algorithm DRA.

After a data record carrier recognition algorithm is started (BGN), a first step 20 consists in calibrating the reading/writing head operating parameter based on the jitter. For example, the radial tilt RT is calibrated (RT CAL) and the focus offset is calibrated (FO CAL). In a second step 21, the method of the invention according to either the first or the second embodiment is performed (OPDC). After the second step 21, the data record carrier recognition algorithm DRA is finished (END).

Fig.7 is a block diagram illustrating a second application example of the method of the invention.

The adaptive method of the invention may be executed during an execution of an optimum power calibration algorithm OPCA.

After an optimum power calibration algorithm is started (BGN), a first step 30 consists in performing a known optimum power calibration. Such an OPCA is well-known in the art and typically involves conducting a test tracks writing in a designated area, generally known as a power calibration area, while the actual writing power level of the laser source is adjusted in steps. The optimum power calibration requires that some operating parameters of the data recording device are set to optimum value. A loop enables setting the reading/writing head operating parameters according to the adaptive method of the invention. The loop comprises a second 31, a third 32 and a fourth 33 steps.

In the second step 31, a plurality of tracks is written (WT).

In the third step 32, the reading/writing head operating parameter based on the jitter are calibrated. For example, the radial tilt RT is calibrated (RT CAL) and the focus offset FO is calibrated (FO CAL).

In the fourth step 33, the method of the invention according to either the first or the second embodiment is performed (OPDC).
The reading/writing head operating parameters are set to their respective actual values and the optimum power calibration is repeated until optimum parameters are set.

Subsequently, the optimum power calibration algorithm OPCA is finished (END).

Though, both examples depicted in Figures 6 and 7 only described calibration operation involving the radial tilt RT and the focus offset FO, it is apparent that other parameters may further be calibrated, for example the tangential tilt TT and/or the collimation CO and/ or other parameters that may affect the operation of the reading/writing head OH.

Though, the hereinbefore description focused on an application of the method of the invention to an optical data recording device using a laser, it will be apparent for a person skilled in the art that the invention could also be used into a magnetic hard disk drive application.

The drawings and their description hereinbefore illustrate rather than limit the invention.

Any reference sign in a claim should not be construed as limiting the claim. The word "comprising" does not exclude the presence of other elements than those listed in a claim. The word "a" or "an" preceding an element does not exclude the presence of a plurality of such element. The present invention is, therefore, defined by the features comprised in the appended claims.

## Claims

1. A method of operating a data recording device (DRD) comprising a reading/writing head (OH) for reading/writing data on a data record carrier (OM) insertable into the data recording device (DRD), wherein the method comprises the steps of:
- varying at least one reading/writing head (OH) operating parameter until said operating parameter reaches a determined value,
- determining at least one error associated to the reading/writing head (OH) operating parameter, via determining an actual jitter value (DET σ_{A}), an actual error rate value (DET ER_{A}) and an actual error rate variation value (DET ΔER) associated to a reading/writing operation on the data record carrier (OM),
- regulating the reading/writing head (OH) operating parameter, based on the said actual values so as to maintain the error lower than an error thresho ld.

2. A method of operating a data recording device (DRD) according to claim 1, wherein the step of varying consists in modifying the parameter (PM) so as to decrease the jitter value (σ) associated to the parameter.

3. A method of operating a data recording device (DRD) according to claim 1, wherein the step of regulating consists in modifying the reading/writing head (OH) operating parameter when the actual jitter value, the actual error rate value and the actual error rate variation value are below an jitter threshold (σ_{A}<σ_{TH}), an error rate threshold (ER_{A}<ER_{TH}) and an error rate variation threshold (ΔER<ΔER_{TH}), respectively.

4. A method of operating a data recording device (DRD) according to claim 3, wherein the reading/writing head (OH) operating parameter modification consists in calculating a reading/writing head operating parameter variation (ΔPM) and subtracting said variation to the reading/writing head (OH) operating parameter.

5. A method of operating a data recording device (DRD) according to claim 4, wherein the reading/writing head (OH) operating parameter variation is calculated according to a binary search method.

6. A method of operating a data recording device (DRD) according to any one of the preceding claims, wherein the error associated to the reading/writing head (OH) operating parameter is calculated according to a determined frequency.

7. A method of operating a data recording device (DRD) according to any one of the preceding claims, wherein the determined value reached by the reading/writing head (OH) operating parameter is set at zero (PM_{Z}).

8. A method of operating a data recording device (DRD) according to any one of the preceding claims, wherein the reading/writing head (OH) operating parameter is chosen among the group of reading/writing head (OH) operating parameter comprising the radial tilt (RT), the focus offset (FO), the tangential tilt (TT) and/or the collimation (CO).

9. A data recording device (DRD) comprising a reading/writing head (OH) for reading/writing data on a data record carrier (OM) insertable into the data recording device (DRD) and an electronic arrangement (EA) coupled to the reading/writing head (OH), wherein the electronic arrangement (EA) comprises means (DRV,PRO) for:
- varying at least one reading/writing head (OH) operating parameter until said operating parameter reaches a determined value,
- determining at least one error associated to the reading/writing head (OH) operating parameter, via determining an actual jitter value (DET σ_{A}), an actual error rate value (DET ER_{A}) and an actual error rate variation value (DET ΔER) associated to a reading/writing operation on the data record carrier,
- regulating the reading/writing head (OH) operating parameter based on said actual values so as to maintain the error lower than an error threshold.

10. A data recording device (DRD) according to claim 9, wherein the electronic arrangement (EA) comprises a processing module (PRO) coupled to a driver module (DRV), the driver module generating at least one control signal (S_{OH}) defining the parameter of the reading/writing head (OH), and providing the control signal (S_{OH}) to the reading/writing head (OH).

11. A data recording device (DRD) according to claim 9 or 10, wherein the data record carrier (OM) is an optical disk comprising a spiral track of data and the reading/writing head (OH) comprises a laser source emitting a laser beam towards the optical disk.

12. A computer program product for a data recording device (DRD) comprising a reading/writing head (OH) for reading/writing data on a data record carrier (OM) insertable into the data recording device(DRD), the computer program product comprising a set of instructions that, when loaded into the data recording device (DRD), causes the data recording device (DRD) to carry out the steps of:
- varying at least one reading/writing head (OH) operating parameter until said operating parameter reaches a determined value,
- determining at least one error associated to the reading/writing head (OH) operating parameter, via determining an actual jitter value (DET σ_{A}), an actual error rate value (DET ER_{A}) and an actual error rate variation value (DET ΔER) associated to a reading/writing operation on the data record carrier,
- regulating the reading/writing head (OH) operating parameter based on said actual values so as to maintain the error lower than an error threshold.

## Patentansprüche

1. Verfahren zum Betreiben einer Datenaufzeichnungsvorrichtung (DRD) mit einem Lese-/Schreibkopf (OH) zum Lesen/Schreiben von Daten auf einem in die Datenaufzeichnungsvorrichtung (DRD) einsetzbaren Datenträger (OM), wobei das Verfahren die folgenden Schritte umfasst:
- Variieren von mindestens einem Lese-/Schreibkopf-(OH) Betriebsparameter, bis der Betriebsparameter einen ermittelten Wert erreicht,
- Ermitteln von mindestens einem dem Lese-/Schreibkopf-(OH) Betriebsparameter zugeordneten Fehler durch Ermitteln eines effektiven Jitter-Wertes (DET σ_{A}), eines effektiven Fehlerratenwertes (DET ER_{A}) sowie eines effektiven Fehlerratenvariationswertes (DET ΔER), der einem Lese-/Schreibbetrieb auf dem Datenträger (OM) zugeordnet ist,
- Einstellen des Lese-/Schreibkopf-(OH) Betriebsparameters auf der Grundlage der effektiven Werte, um den Fehler unterhalb einer Fehlerschwelle zu halten.

2. Verfahren zum Betreiben einer Datenaufzeichnungsvorrichtung (DRD) nach Anspruch 1, wobei der Schritt des Variierens in dem Modifizieren des Parameters (PM) besteht, um den dem Parameter zugeordneten Jitterwert (σ) zu verringern.

3. Verfahren zum Betreiben einer Datenaufzeichnungsvorrichtung (DRD) nach Anspruch 1, wobei der Schritt des Einstellens in dem Modifizieren des Lese-/Schreibkopf (OH) Betriebsparameters besteht, wenn der effektive Jitterwert, der effektive Fehlerratenwert und der effektive Fehlerratenvariationswert jeweils unterhalb einer Jitterschwelle (σ_{A} <σ_{TH}), einer Fehlerratenschwelle (ER_{A}<ER_{TH}) und einer Fehlerratenvariationsschwelle (ΔER<ΔER_{TH}) liegen.

4. Verfahren zum Betreiben einer Datenaufzeichnungsvorrichtung (DRD) nach Anspruch 3, wobei die Lese-/Schreibkopf-(OH) Betriebsparametermodifizierung in dem Berechnen einer Lese-/Schreibkopf-Betriebsparametervariation (ΔPM) und Subtrahieren der Variation von dem Lese-/Schreibkopf-(OH) Betriebsparameter besteht.

5. Verfahren zum Betreiben einer Datenaufzeichnungsvorrichtung (DRD) nach Anspruch 4, wobei die Lese-/Schreibkopf-(OH) Betriebsparametervariation nach einem binären Suchverfahren berechnet wird.

6. Verfahren zum Betreiben einer Datenaufzeichnungsvorrichtung (DRD) nach einem der vorangegangenen Ansprüche, wobei der dem Lese-/Schreibkopf-(OH) Betriebsparameter zugeordnete Fehler nach einer ermittelten Frequenz berechnet wird.

7. Verfahren zum Betreiben einer Datenaufzeichnungsvorrichtung (DRD) nach einem der vorangegangenen Ansprüche, wobei der ermittelte, von dem Lese-/Schreibkopf (OH) Betriebsparameter erreichte Wert auf Null gesetzt wird (PM_{Z}) .

8. Verfahren zum Betreiben einer Datenaufzeichnungsvorrichtung (DRD) nach einem der vorangegangenen Ansprüche, wobei der Lese-/Schreibkopf-(OH) Betriebsparameter aus der Lese-/Schreibkopf-(OH) Betriebsparametergruppe, umfassend die radiale Neigung (RT), den Fokusversatz (FO), die tangentiale Neigung (TT) und/oder die Kollimation (CO), ausgewählt wird.

9. Datenaufzeichnungsvorrichtung (DRD) mit einem Lese-/Schreibkopf (OH) zum Lesen/Schreiben von Daten auf einem in die Datenaufzeichnungsvorrichtung (DRD) einsetzbaren Datenträger (OM) sowie einer mit dem Lese-/Schreibkopf (OH) gekoppelten elektronischen Anordnung (EA), wobei die elektronische Anordnung (EA) Mittel (DRV, PRO) umfasst, um:
- mindestens einen Lese-/Schreibkopf-(OH) Betriebsparameter zu variieren, bis der Betriebsparameter einen ermittelten Wert erreicht,
- mindestens einen dem Lese-/Schreibkopf-(OH) Betriebsparameter zugeordneten Fehler durch Ermitteln eines effektiven Jitter-Wertes (DET σ_{A}), eines effektiven Fehlerratenwertes (DET ER_{A}) sowie eines effektiven Fehlerratenvariationswertes (DET ΔER), der einem Lese-/Schreibbetrieb auf dem Datenträger (OM) zugeordnet ist, zu ermitteln,
- den Lese-/Schreibkopf-(OH) Betriebsparameter auf der Grundlage der effektiven Werte einzustellen, um den Fehler unterhalb einer Fehlerschwelle zu halten.

10. Datenaufzeichnungsvorrichtung (DRD) nach Anspruch 9, wobei die elektronische Anordnung (EA) ein mit einem Treibermodul (DRV) gekoppeltes Verarbeitungsmodul (PRO) umfasst, wobei das Treibermodul mindestens ein den Parameter des Lese-/Schreibkopfes (OH) definierendes Steuersignal (S_{OH}) erzeugt und das Steuersignal (S_{OH}) dem Lese-/Schreibkopf (OH) zuführt.

11. Datenaufzeichnungsvorrichtung (DRD) nach Anspruch 9 oder 10, wobei der Datenträger (OM) eine optische Platte mit einer spiralförmigen Datenspur ist und der Lese-/Schreibkopf (OH) eine einen Laserstrahl zu der optischen Platte emittierende Laserquelle umfasst.

12. Computerprogrammprodukt für eine Datenaufzeichnungsvorrichtung (DRD) mit einem Lese-/Schreibkopf (OH) zum Lesen/Schreiben von Daten auf einem in die Datenaufzeichnungsvorrichtung (DRD) einsetzbaren Datenträger (OM), wobei das Computerprogrammprodukt einen Satz von Befehlen umfasst, der nach Laden in die Datenaufzeichnungsvorrichtung (DRD) bewirkt, dass die Datenaufzeichnungsvorrichtung (DRD) die folgenden Schritte ausführt:
- Variieren von mindestens einem Lese-/Schreibkopf-(OH) Betriebsparameter, bis der Betriebsparameter einen ermittelten Wert erreicht,
- Ermitteln von mindestens einem dem Lese-/Schreibkopf-(OH) Betriebsparameter zugeordneten Fehler durch Ermitteln eines effektiven Jitter-Wertes (DET σ_{A}), eines effektiven Fehlerratenwertes (DET ER_{A}) sowie eines effektiven Fehlerratenvariationswertes (DET ΔER), der einem Lese-/Schreibbetrieb auf dem Datenträger (OM) zugeordnet ist,
- Einstellen des Lese-/Schreibkopf-(OH) Betriebsparameters auf der Grundlage der effektiven Werte, um den Fehler unterhalb einer Fehlerschwelle zu halten.

## Revendications

1. Procédé d'exploitation d'un dispositif d'enregistrement de données (DRD) comprenant une tête de lecture/écriture (OH) pour lire/écrire des données sur un support d'enregistrement de données (OM) pouvant être inséré dans le dispositif d'enregistrement de données (DRD), dans lequel le procédé comprend les étapes consistant à :
- changer au moins un paramètre d'exploitation de tête de lecture/écriture (OH) jusqu'à ce que ledit paramètre d'exploitation atteigne une valeur déterminée,
- déterminer au moins une erreur associée au paramètre d'exploitation de tête de lecture/écriture (OH), en déterminant une valeur de gigue réelle (DET _{σA}), une valeur de taux d'erreur réelle (DET ER_{A}) et une valeur de variation de taux d'erreur réelle (DET ΔER) associée à une opération de lecture/écriture sur le support d'enregistrement de données (OM),
- réguler le paramètre d'exploitation de tête de lecture/écriture (OH) sur la base desdites valeurs réelles de manière à maintenir l'erreur en dessous d'un seuil d'erreur.

2. Procédé d'exploitation d'un dispositif d'enregistrement de données (DRD) selon la revendication 1, dans lequel l'étape de changement consiste à modifier le paramètre (PM) de manière à réduire la valeur de gigue (σ) associée au paramètre.

3. Procédé d'exploitation d'un dispositif d'enregistrement de données (DRD) selon la revendication 1, dans lequel l'étape de régulation consiste à modifier le paramètre d'exploitation de tête de lecture/écriture (OH) lorsque la valeur de gigue réelle, la valeur de taux d'erreur réelle et la valeur de variation de taux d'erreur réelle sont respectivement au-dessous d'un seuil de gigue (σ_{A}<σ_{TH}), d'un seuil de taux d'erreur (ER_{A}<ER_{TH}) et d'un seuil de variation de taux d'erreur (ΔER<ΔER_{TH}).

4. Procédé d'exploitation d'un dispositif d'enregistrement de données (DRD) selon la revendication 3, dans lequel la modification du paramètre d'exploitation de tête de lecture/écriture (OH) consiste à calculer une variation de paramètre d'exploitation de tête de lecture/écriture (ΔPM) et à soustraire ladite variation au paramètre d'exploitation de tête de lecture/écriture (OH).

5. Procédé d'exploitation d'un dispositif d'enregistrement de données (DRD) selon la revendication 4, dans lequel la variation de paramètre d'exploitation de tête de lecture/écriture (OH) est calculée selon une méthode de recherche binaire.

6. Procédé d'exploitation d'un dispositif d'enregistrement de données (DRD) selon l'une quelconque des revendications précédentes, dans lequel l'erreur associée au paramètre d'exploitation de tête de lecture/écriture (OH) est calculée en fonction d'une fréquence déterminée.

7. Procédé d'exploitation d'un dispositif d'enregistrement de données (DRD) selon l'une quelconque des revendications précédentes, dans lequel la valeur déterminée atteinte par le paramètre d'exploitation de tête de lecture/écriture (OH) est réglée à zéro (PM_{Z}).

8. Procédé d'exploitation d'un dispositif d'enregistrement de données (DRD) selon l'une quelconque des revendications précédentes, dans lequel le paramètre d'exploitation de tête de lecture/écriture (OH) est choisi dans le groupe de paramètres d'exploitation de tête de lecture/écriture (OH) se composant de l'inclinaison radiale (RT), du décalage de focalisation (FO), de l'inclinaison tangentielle (TT) et/ou de la collimation (CO).

9. Dispositif d'enregistrement de données (DRD) comprenant une tête de lecture/écriture (OH) pour lire/écrire des données sur un support d'enregistrement de données (OM) pouvant être inséré dans le dispositif d'enregistrement de données (DRD) et un agencement électronique (EA) couplé à la tête de lecture/écriture (OH), dans lequel l'agencement électronique (EA) comprend des moyens (DRV, PRO) pour :
- changer au moins un paramètre d'exploitation de tête de lecture/écriture (OH) jusqu'à ce que ledit paramètre d'exploitation atteigne une valeur déterminée,
- déterminer au moins une erreur associée au paramètre d'exploitation de tête de lecture/écriture (OH), en déterminant une valeur de gigue réelle (DET σ_{A}), une valeur de taux d'erreur réelle (DET ER_{A}) et une valeur de variation de taux d'erreur réelle (DET ΔER) associée à une opération de lecture/écriture sur le support d'enregistrement de données,
- réguler le paramètre d'exploitation de tête de lecture/écriture (OH) sur la base desdites valeurs réelles de manière à maintenir l'erreur en dessous d'un seuil d'erreur.

10. Dispositif d'enregistrement de données (DRD) selon la revendication 9, dans lequel l'agencement électronique (EA) comprend un module de traitement (PRO) couplé à un module de commande (DRV), le module de commande générant au moins un signal de commande (S_{OH}) définissant le paramètre de la tête de lecture/écriture (OH), et fournissant le signal de commande à la tête de lecture/écriture (OH).

11. Dispositif d'enregistrement de données (DRD) selon la revendication 9 ou 10, dans lequel le support d'enregistrement de données (OM) est un disque optique comprenant une piste de données en spirale et la tête de lecture/écriture (OH) comprend une source laser émettant un faisceau laser vers le disque optique.

12. Produit de programme informatique pour un dispositif d'enregistrement de données (DRD) comprenant une tête de lecture/écriture (OH) pour lire/écrire des données sur un support d'enregistrement de données (OM) pouvant être inséré dans le dispositif d'enregistrement de données (DRD), le produit de programme informatique comprenant un jeu d'instructions qui, lorsqu'il est chargé dans le dispositif d'enregistrement de données (DRD), amène le dispositif d'enregistrement de données (DRD) à effectuer les étapes consistant à :
- changer au moins un paramètre d'exploitation de tête de lecture/écriture (OH) jusqu'à ce que ledit paramètre d'exploitation atteigne une valeur déterminée,
- déterminer au moins une erreur associée au paramètre d'exploitation de tête de lecture/écriture (OH), en déterminant une valeur de gigue réelle (DET σ_{A}), une valeur de taux d'erreur réelle (DET ER_{A}) et une valeur de variation de taux d'erreur réelle (DET ΔER) associée à une opération de lecture/écriture sur le support d'enregistrement de données,
- réguler le paramètre d'exploitation de tête de lecture/écriture (OH) sur la base desdites valeurs réelles de manière à maintenir l'erreur en dessous d'un seuil d'erreur.
